# FASCICULE DE BREVET EUROPEEN

(11) **EP 4 208 633 B1**
(45) Date de publication et mention de la délivrance du brevet: **14.05.2025**
(21) Numéro de dépôt: 21778169.9
(22) Date de dépôt: 01.09.2021
(51) Int. Cl.: F02C 3/107, F02K 3/06

(54) **ASSEMBLAGE POUR TURBOMACHINE D'AÉRONEF, COMPRENANT DES MOYENS DE RÉTENTION AXIALE ET RADIALE DE SOUFFLANTE**
ANORDNUNG FÜR EIN FLUGZEUGTURBINENTRIEBWERK MIT MITTELN ZUR AXIALEN UND RADIALEN HALTERUNG EINES LÜFTERS
ASSEMBLY FOR AN AIRCRAFT TURBINE ENGINE, COMPRISING MEANS FOR THE AXIAL AND RADIAL RETENTION OF A FAN

(30) Priorité: 03.09.2020 FR 2008938
(43) Date de publication de la demande: 12.07.2023
(73) Titulaire: SAFRAN AIRCRAFT ENGINES, 75015 Paris (FR)
(72) Inventeur: PAPIN, Thierry, Georges, Paul, 77550 MOISSY-CRAMAYEL (FR); DESOMBRE, Didier, Gabriel, Bertrand, 77550 MOISSY-CRAMAYEL (FR)
(74) Mandataire: Brevalex
(86) Numéro de dépôt international: PCT/FR2021/051504
(87) Numéro de publication internationale: WO 2022/049342

(56) Documents cités:
- FR-A1- 3 092 884
- US-A1- 2013 195 604
- US-A1- 2013 320 185

## Description

### DOMAINE TECHNIQUE

La présente invention se rapporte au domaine des turbomachines d'aéronef, et en particulier aux turbomachines à double flux et/ou à double corps, par exemple des turboréacteurs.

L'invention s'applique en particulier aux turbomachines comprenant une soufflante entraînée par un réducteur de vitesse.

### ETAT DE LA TECHNIQUE ANTERIEURE

Sur les turbomachines d'aéronef, il est connu de prévoir une soufflante entraînée par un réducteur de vitesse, de manière à limiter la vitesse de rotation de la soufflante par rapport à celle du corps basse pression. Dans une configuration dite planétaire, le réducteur comprend une couronne intérieure entraînée par le corps basse pression, un porte-satellites fixé sur le stator de la turbomachine, et une couronne extérieure solidaire d'un arbre de soufflante. Les pignons satellites engrènent avec chacune des couronnes intérieure et extérieure du train épicycloïdal. Une telle configuration est par exemple connue du document WO 2019/158883.

L'arbre de soufflante est généralement retenu axialement par un palier, lui-même porté par un support de palier relié à la partie statorique de la turbomachine. Le palier comporte en effet une butée qui empêche l'arbre de soufflante de se déplacer axialement, dans la direction allant de l'aval vers l'amont.

En cas de défaillance du palier ou du support de palier, la soufflante est sujette à un risque de déplacement axial vers l'amont. Il existe par conséquent un besoin de fournir une conception limitant / évitant ce risque

Les documents US2013/320185 A1, US2013/195604 A1 et FR3092884 A1 divulguent des assemblages pour turbomachines d'aéronef selon l'art antérieur.

### EXPOSÉ DE L'INVENTION

Pour répondre à ce besoin, l'invention a tout d'abord pour objet un assemblage pour turbomachine d'aéronef, l'assemblage comprenant une soufflante, un réducteur de vitesse entraînant la soufflante et situé en aval de celle-ci, un carter intermédiaire comportant une structure annulaire interne délimitant intérieurement une cavité logeant au moins partiellement le réducteur, ce dernier comprenant un train épicycloïdal équipé d'un porte-satellites dont une couronne est fixée sur la structure annulaire interne du carter intermédiaire, par l'intermédiaire d'un dispositif de retenue principal.

Selon l'invention, l'assemblage comporte un dispositif de retenue secondaire de la couronne du porte-satellites par rapport à la structure annulaire interne du carter intermédiaire, le dispositif de retenue secondaire comprenant :
- des premières saillies se projetant radialement vers l'intérieur depuis la structure annulaire interne du carter intermédiaire, les premières saillies étant espacées circonférentiellement les unes des autres autour d'un axe longitudinal de la turbomachine, chaque première saillie présentant un évidement ouvert radialement vers l'intérieur, ouvert axialement vers l'aval, et ouvert circonférentiellement selon un premier sens circonférentiel, et délimité par trois faces, respectivement une face de retenue axiale, une face de retenue radiale ainsi qu'une face de retenue circonférentielle ;
- des secondes saillies se projetant radialement vers l'extérieur depuis la couronne du porte-satellites, les secondes saillies étant espacées circonférentiellement les unes des autres autour de l'axe longitudinal de la turbomachine, et coopérant deux à deux avec les premières saillies de manière à ce que chaque seconde saillie soit partiellement logée dans l'évidement de sa première saillie associée, en aval de celle-ci.

L'invention répond au besoin de manière simple et fiable, en créant des butées par coopération entre des saillies radiales, qui forment une liaison du type à crabotage. En particulier, en retenant axialement et radialement le porte-satellites du réducteur de vitesse, la soufflante est également retenue axialement et radialement par rapport à la structure annulaire interne du carter intermédiaire, en cas de défaillance du palier de support de l'arbre de soufflante ou de défaillance du support de ce palier. L'invention prévoit ainsi astucieusement d'agir sur le porte-satellites du réducteur pour interdire / limiter les déplacements axiaux et radiaux de la soufflante, en cas de défaillance.

En outre, la coopération entre les premières et secondes saillies radiales assure aussi avantageusement une transmission du couple du réducteur / de la soufflante, vers la structure annulaire interne du carter intermédiaire. Cette transmission du couple selon la direction circonférentielle, par les saillies radiales, peut être observée en permanence, ou seulement en cas d'une défaillance telle que celles précitées. Le jeu circonférentiel entre les premières et secondes saillies est préférentiellement nul, ou très faible, mais il peut alternativement être plus important, sans sortir du cadre de l'invention.

En revanche, les jeux axiaux et radiaux entre les premières et secondes saillies radiales sont préférentiellement plus conséquents, afin de limiter la transmission des vibrations au réducteur au cours du fonctionnement normal de la turbomachine.

L'invention prévoit de préférence au moins l'une des caractéristiques optionnelles suivantes, considérées individuellement ou en combinaison.

Comme évoqué précédemment, l'assemblage est configuré de sorte que dans une configuration normale de fonctionnement de la turbomachine, un jeu radial soit défini entre chaque seconde saillie et la face de retenue radiale délimitant l'évidement de la première saillie avec laquelle elle coopère, et/ou un jeu axial soit défini entre chaque seconde saillie et la face de retenue axiale délimitant cet évidement, et/ou un jeu circonférentiel soit défini entre chaque seconde saillie et la face de retenue circonférentielle délimitant cet évidement.

De préférence, la structure annulaire interne du carter intermédiaire est réalisée d'une seule pièce, avec les premières saillies, préférentiellement par fonderie.

De préférence, le dispositif de retenue principal comporte une pièce annulaire souple de demi-section en forme générale de U ouvert radialement vers l'extérieur, la branche amont du U étant fixée sur la couronne du porte-satellites, et la branche aval du U étant fixée sur une bride de la structure annulaire interne du carter intermédiaire, en saillie radialement vers l'intérieur.

De préférence, le nombre de premières saillies est compris entre trois et quinze, et préférentiellement entre six et dix.

De préférence, le train épicycloïdal comporte une couronne extérieure engrenant avec des pignons satellites du porte-satellites, la couronne extérieure étant solidaire d'un arbre de soufflante.

De préférence, l'arbre de soufflante est supporté par un palier assurant sa rétention axiale dans la direction allant de l'aval vers l'amont.

De préférence, le palier est porté par un support de palier fixé à une partie stator de l'assemblage, et de préférence la structure annulaire interne du carter intermédiaire.

De préférence, le carter intermédiaire comporte également une structure annulaire externe reliée à la structure annulaire interne par des bras radiaux, l'espace annulaire entre les deux structures annulaires interne et externe formant partie d'une veine primaire de la turbomachine.

L'invention a également pour objet une turbomachine d'aéronef comprenant un tel assemblage, la turbomachine étant préférentiellement un turboréacteur à double flux, et à double corps.

D'autres caractéristiques et avantages de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue schématique de côté d'un turboréacteur selon l'invention ;
[Fig. 2] représente une vue agrandie, plus détaillée, du réducteur équipant le turboréacteur montré sur la figure précédente ;
[Fig. 3] est une vue avant du carter intermédiaire faisant partie intégrante d'un assemblage selon un mode de réalisation préféré de l'invention, mis en œuvre dans le turboréacteur de la figure 1 ;
[Fig. 4] est une vue en perspective d'une partie de l'assemblage ;
[Fig. 5]est une vue en perspective d'une partie de l'assemblage, selon un autre angle de vue ; et
[Fig. 6]est une vue en perspective d'une partie de l'assemblage, selon encore un autre angle de vue.

### EXPOSÉ DÉTAILLÉ DE MODES DE RÉALISATION PRÉFÉRÉS

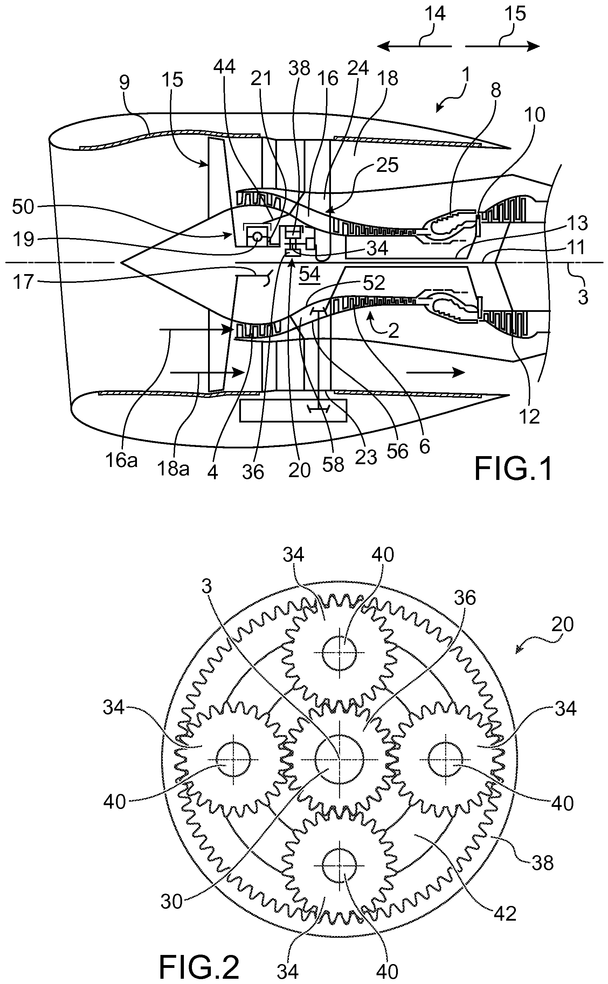

En référence à la figure 1, il est représenté un turboréacteur 1 à double flux et à double corps, présentant de préférence un taux de dilution élevé. Le turboréacteur 1 comporte de façon classique un générateur de gaz 2 de part et d'autre duquel sont agencés un compresseur basse pression 4 et une turbine basse pression 12, ce générateur de gaz 2 comprenant un compresseur haute pression 6, une chambre de combustion 8 et une turbine haute pression 10. Par la suite, les termes « avant » et « arrière » sont considérés selon une direction 14 opposée à la direction d'écoulement principale des gaz au sein du turboréacteur, cette direction 14 étant parallèle à l'axe longitudinal 3 de celle-ci. En revanche, les termes « amont » et « aval » sont considérés selon la direction d'écoulement principale des gaz au sein du turboréacteur, référencée 15.

Le compresseur basse pression 4 et la turbine basse pression 12 forment un corps basse pression, et sont reliés l'un à l'autre par un arbre basse pression 11 centré sur l'axe 3. De même, le compresseur haute pression 6 et la turbine haute pression 10 forment un corps haute pression, et sont reliés l'un à l'autre par un arbre haute pression 13 centré sur l'axe 3 et agencé autour de l'arbre basse pression 11. Les arbres sont supportés par des paliers de roulement (non représentés), qui sont lubrifiés en étant agencés dans des enceintes d'huile. Il en est de même pour un arbre de soufflante 17, également dit moyeu de soufflante, qui est supporté par plusieurs paliers de roulement 19 dont l'un d'entre eux a été représenté partiellement sur la figure 1. Ce palier de roulement 19 supporte donc l'arbre de soufflante 17, en comportant une butée axiale 21 empêchant l'arbre 17 et la soufflante 15 de se déplacer axialement vers l'amont par rapport à la partie stator du turboréacteur. Il s'agit donc d'un palier 19 pour la rétention axiale de la soufflante dans la direction axiale, ce palier étant également dénommé palier de butée. Il est lui-même supporté par un support de palier 44, fixé à la partie stator du turboréacteur.

Le turboréacteur 1 comporte par ailleurs, à l'avant du générateur de gaz 2 et du compresseur basse pression 4, une soufflante 15 unique qui est ici agencée directement à l'arrière d'un cône d'entrée d'air du moteur. La soufflante 15 est rotative selon l'axe 3, et entourée d'un carter de soufflante 9. La soufflante 15 est entraînée par un réducteur de vitesse 20 via l'arbre de soufflante 17, ce qui lui permet de tourner à une vitesse plus lente que celle du corps basse pression.

En outre, le turboréacteur 1 définit une veine primaire 16 destinée à être traversée par un flux primaire 16a, ainsi qu'une veine secondaire 18 destinée à être traversée par un flux secondaire 18a situé radialement vers l'extérieur par rapport au flux primaire, le flux de la soufflante étant donc divisé.

En aval de la soufflante 15, dans la veine secondaire 18, il est prévu une couronne d'aubes directrices qui sont ici des aubes directrices de sortie 24 (ou OGV, de l'anglais « Outlet Guide Vane »). Ces aubes statoriques 24 relient un élément extérieur de carter, ici une virole extérieure 23, à un élément intérieur de carter correspondant ici à un carter intermédiaire 25, agencé axialement entre les deux compresseurs 4 et 6. De préférence, le support de palier 44 est fixé sur le carter intermédiaire 25, préférentiellement sur une structure annulaire interne de celui-ci, sur ou à proximité d'une extrémité amont de cette structure.

En référence aux figures 1 et 2, il va être décrit le réducteur 20 qui comprend un train épicycloïdal. Plus précisément, ce train épicycloïdal comporte des pignons satellites 34 en prise avec un planétaire interne 36, également dit pignon central ou couronne intérieure. Les pignons satellites 34 engrènent également avec un planétaire externe 38, également dénommé couronne extérieure. Les planétaires interne 36 et externe 38 sont coaxiaux à l'axe 3 du turboréacteur. Chaque pignon satellite 34 est monté libre en rotation autour d'un pivot 40, et les pivots 40 sont solidaires d'un porte-satellites 42.

Dans ce réducteur planétaire 20, la couronne intérieure 36 est solidaire en rotation de l'arbre basse pression 11, qui forme une entrée d'un train d'engrenages. Le porte-satellites 42 est fixé sur la partie stator du turboréacteur, tandis que la couronne extérieure 38 est rendue solidaire de l'arbre de soufflante 17, en formant une sortie de réduction de la vitesse du train d'engrenages épicycloïdal.

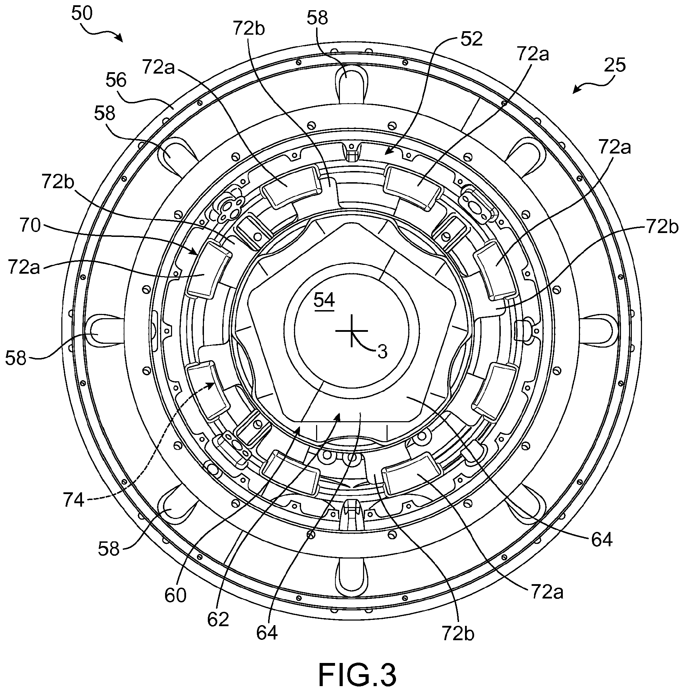

L'invention porte sur un assemblage 50 du turboréacteur, qui comporte la soufflante 15, le réducteur de vitesse 20 agencé en aval de la soufflante, ainsi que le carter intermédiaire 25. En référence aux figures 1 et 3, le carter intermédiaire 25 comporte une structure annulaire interne 52 délimitant intérieurement une cavité 54 centrée sur l'axe 3, logeant au moins une partie du réducteur 20. Le carter 20 comprend également une structure annulaire externe 56, reliée à la structure annulaire interne par des bras radiaux 58 espacés circonférentiellement les uns des autres. L'espace annulaire entre les deux structures annulaires interne et externe 52, 56 forme une partie de la veine primaire 16 du turboréacteur.

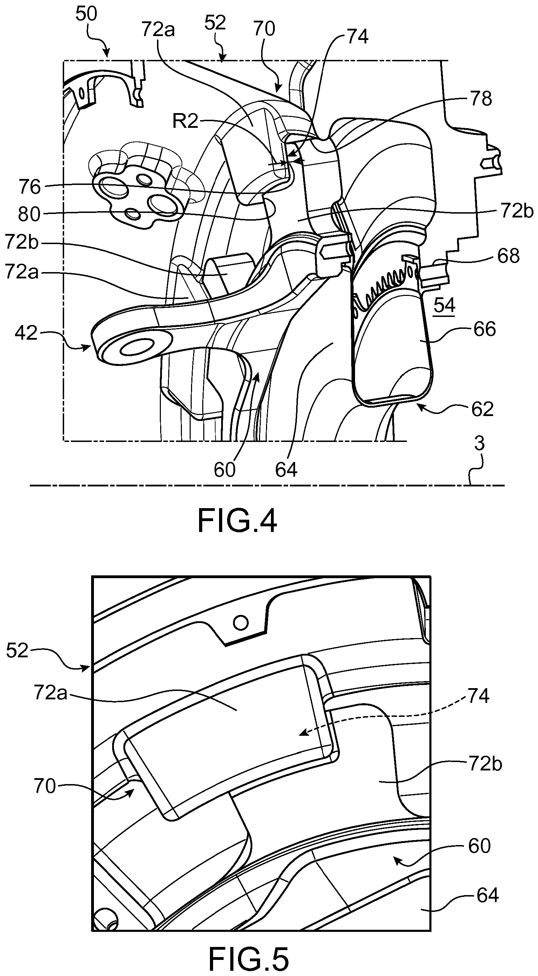

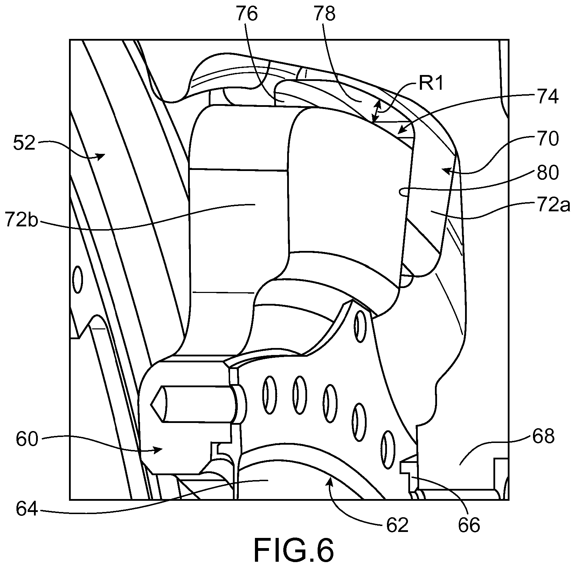

En référence à présent aux figures 3 à 6, il est tout d'abord noté que la couronne 60 du porte-satellites 42 est fixée sur la structure annulaire interne 52, par l'intermédiaire d'un dispositif de retenue principal 62. Celui-ci comporte une pièce annulaire souple de demi-section en forme générale de U ouvert radialement vers l'extérieur. La branche amont 64 du U est fixée sur la couronne 60 du porte-satellites, de préférence par une rangée circonférentielle de boulons. De même, la branche aval 66 du U est fixée sur une bride 68 de la structure annulaire interne 52 du carter intermédiaire 25, également de préférence par une rangée circonférentielle de boulons. La bride 68 se trouve à une extrémité aval de la structure annulaire interne 52, en étant en saillie radialement vers l'intérieur, et délimitant ainsi la cavité 54 vers l'aval.

Grâce à la souplesse du dispositif de retenue principal 62 en forme générale de U, les vibrations de la partie de stator du turboréacteur sont partiellement filtrées, et non transmises au réducteur 20 dont la durée de vie s'en trouve avantageusement améliorée, notamment en matière d'usure des dents. Au cours du fonctionnement normal du turboréacteur, ce sont essentiellement les vibrations axiales et radiales qui sont filtrées par le dispositif de retenue principal 62 en forme générale de U, et non transmises à la couronne 60 du porte-satellites 42.

En cas de défaillance dans la rétention axiale de la soufflante 15, par exemple découlant d'une défaillance du palier de roulement 19 ou de son support de palier 44, il existe un risque de déplacement vers l'avant de cette même soufflante. Pour pallier cet inconvénient, l'une des particularités de l'invention réside dans la mise en œuvre d'un dispositif de retenue secondaire de la couronne 60 du porte-satellites, capable de retenir axialement la soufflante vers l'amont lors d'une défaillance telle que celles décrites ci-dessus. De plus, ce dispositif de retenue secondaire 70 n'est pas seulement conçu pour limiter les déplacements axiaux de la couronne 60 / la soufflante 15 par rapport à la structure annulaire interne 52 du carter du intermédiaire, mais également les déplacements radiaux en cas de balourd important sur la soufflante. En outre, ce dispositif de retenue secondaire 70 est également conçu pour assurer la transmission du couple du réducteur / de la soufflante, vers la structure annulaire interne 52 du carter intermédiaire 25. Cette transmission du couple selon la direction circonférentielle peut être observée en permanence, ou seulement en cas d'une défaillance du type de celles précitées.

Pour la réalisation du dispositif de retenue secondaire 70, il est tout d'abord prévu des premières saillies 72a se projetant radialement vers l'intérieur, depuis la structure annulaire interne 52 du carter intermédiaire. Les premières saillies 72a sont espacées circonférentiellement les unes des autres autour de l'axe 3. Elles prennent la forme de crabots ou de dents, par exemple prévues dans un nombre entre six et dix, régulièrement espacées selon la direction circonférentielle. Les premières saillies 72a sont réalisées d'une seule pièce avec l'ensemble de la structure annulaire interne 52 du carter intermédiaire 25, de préférence par fonderie.

Chaque première saillie 72a présente un évidement 74 réalisé au niveau d'une extrémité distale de cette saillie. L'évidement 74 est ouvert radialement vers l'intérieur, ouvert axialement vers l'aval, et ouvert circonférentiellement selon un premier sens circonférentiel, par exemple le sens horaire en vue avant. En regard de ces trois ouvertures, l'évidement 74 est délimité par trois faces, respectivement une face de retenue axiale 76, une face de retenue radiale 78, ainsi qu'une face de retenue circonférentielle 80. Ces trois faces de retenue adjacentes 76, 78, 80 sont sensiblement perpendiculaires entre elles, et elles forment ainsi une sorte de coin de malle destiné à coopérer avec des secondes saillies 72b, faisant partie intégrante du dispositif de retenue secondaire 70.

En effet, les secondes saillies 72b se projettent radialement vers l'extérieur depuis la couronne 60 du porte-satellites, en étant de préférence réalisées d'une seule pièce avec cette même couronne. Les secondes saillies 72b sont espacées circonférentiellement les unes des autres autour de l'axe 3. Elles prennent également la forme de crabots ou de dents, prévues dans un nombre identique à celui des premières saillies 72b, et régulièrement espacées selon la direction circonférentielle.

Elles coopèrent deux à deux avec les premières saillies 72a, de manière à ce que l'extrémité distale de chaque seconde saillie 72b soit partiellement logée dans l'évidement 74 de sa première saillie associée 72a, en aval de celle-ci.

L'étendue angulaire des premières et secondes saillies 72a, 72b est préférentiellement identique ou similaire.

En configuration normale de fonctionnement du turboréacteur, un jeu radial R1 est défini entre chaque seconde saillie 72b et la face de retenue radiale 78 de la première saillie associée. Ce jeu R1 est faible, par exemple compris entre 0,5 et 5 mm. De manière analogue, un jeu axial R2 d'une ampleur identique similaire est défini entre chaque seconde saillie 72b, et la face de retenue axiale 76 de la première saillie associée. En revanche, préférentiellement, aucun jeu circonférentiel n'est prévu entre chaque seconde saillie 72b et la face de retenue circonférentielle 80 délimitant l'évidement 74, ou bien seulement un jeu de faible ampleur, inférieure à celle des jeux R1 et R2.

En cas de défaillance sur la palier de roulement 19 ou sur le support 44 de ce palier supportant l'arbre de soufflante 17, la soufflante 15 a tendance à se déplacer vers l'avant par rapport à la partie de stator du turboréacteur. Ce déplacement conduit tout d'abord les éléments de stator et de rotor du réducteur 20 à entrer au contact les uns des autres, et dissiper ainsi une partie de l'énergie associée à la soufflante. Ce déplacement de la soufflante est surtout transmis à la couronne 60 du porte-satellites 42, dont le déplacement vers l'avant est rapidement stoppé par la consommation de l'éventuel jeu axial R2 entre les premières et secondes saillies 72a, 72b, qui forment une liaison du type à crabotage devenant active suite à la défaillance observée. Il en est de même pour la consommation du jeu radial R1, dans le cas où cette défaillance conduirait à un balourd élevé de la soufflante, mais néanmoins limité par cette fonctionnalité du dispositif de retenue secondaire 70. En outre, ce dernier continue d'assurer la transmission du couple en cas de défaillance, par la coopération entre les secondes saillies 72b et les faces de retenue circonférentielles 80 délimitant les évidements 74.

L'invention permet ainsi d'apporter une solution compacte et simple, répondant parfaitement aux cas de défaillance de retenue axiale de la soufflante.

Bien entendu, diverses modifications peuvent être apportées par l'homme du métier à l'invention qui vient d'être décrite, uniquement à titre d'exemples non limitatifs et dont la portée est délimitée par les revendications annexées.

## Revendications

1. Assemblage (50) pour turbomachine d'aéronef, l'assemblage comprenant une soufflante (15), un réducteur de vitesse (20) entraînant la soufflante et situé en aval de celle-ci, un carter intermédiaire (25) comportant une structure annulaire interne (52) délimitant intérieurement une cavité (54) logeant au moins partiellement le réducteur, ce dernier comprenant un train épicycloïdal équipé d'un porte-satellites (42) dont une couronne (60) est fixée sur la structure annulaire interne (52) du carter intermédiaire, par l'intermédiaire d'un dispositif de retenue principal (62),
**caractérisé en ce que** l'assemblage comporte un dispositif de retenue secondaire (70) de la couronne (60) du porte-satellites par rapport à la structure annulaire interne (52) du carter intermédiaire, le dispositif de retenue secondaire comprenant :
- des premières saillies (72a) se projetant radialement vers l'intérieur depuis la structure annulaire interne (52) du carter intermédiaire, les premières saillies étant espacées circonférentiellement les unes des autres autour d'un axe longitudinal (3) de la turbomachine, chaque première saillie (72a) présentant un évidement (74) ouvert radialement vers l'intérieur, ouvert axialement vers l'aval, et ouvert circonférentiellement selon un premier sens circonférentiel, et délimité par trois faces, respectivement une face de retenue axiale (76), une face de retenue radiale (78), ainsi qu'une face de retenue circonférentielle (80) ;
- des secondes saillies (72b) se projetant radialement vers l'extérieur depuis la couronne (52) du porte-satellites, les secondes saillies étant espacées circonférentiellement les unes des autres autour de l'axe longitudinal (3) de la turbomachine, et coopérant deux à deux avec les premières saillies (72a) de manière à ce que chaque seconde saillie (72b) soit partiellement logée dans l'évidement (74) de sa première saillie associée, en aval de celle-ci.

2. Assemblage selon la revendication 1, **caractérisé en ce qu'**il est configuré de sorte que dans une configuration normale de fonctionnement de la turbomachine, un jeu radial (R1) soit défini entre chaque seconde saillie (72b) et la face de retenue radiale (78) délimitant l'évidement (74) de la première saillie avec laquelle elle coopère, et/ou un jeu axial (R2) soit défini entre chaque seconde saillie (72b) et la face de retenue axiale (76) délimitant cet évidement (74), et/ou un jeu circonférentiel soit défini entre chaque seconde saillie (72b) et la face de retenue circonférentielle (80) délimitant cet évidement.

3. Assemblage selon la revendication 1 ou la revendication 2, **caractérisé en ce que** la structure annulaire interne (52) du carter intermédiaire (25) est réalisée d'une seule pièce, avec les premières saillies (72a).

4. Assemblage selon l'une quelconque des revendications précédentes, **caractérisé en ce que** le dispositif de retenue principal (70) comporte une pièce annulaire souple de demi-section en forme générale de U ouvert radialement vers l'extérieur, la branche amont (64) du U étant fixée sur la couronne (60) du porte-satellites, et la branche aval (66) du U étant fixée sur une bride (68) de la structure annulaire interne (52) du carter intermédiaire, en saillie radialement vers l'intérieur.

5. Assemblage selon l'une quelconque des revendications précédentes, **caractérisé en ce que** le nombre de premières saillies (72a) est compris entre trois et quinze, et préférentiellement entre six et dix.

6. Assemblage selon l'une quelconque des revendications précédentes, **caractérisé en ce que** le train épicycloïdal comporte une couronne extérieure (38) engrenant avec des pignons satellites (34) du porte-satellites, la couronne extérieure (38) étant solidaire d'un arbre de soufflante (17).

7. Assemblage selon la revendication 6, **caractérisé en ce que** l'arbre de soufflante (17) est supporté par un palier (19) assurant sa rétention axiale dans la direction allant de l'aval vers l'amont.

8. Assemblage selon la revendication 7, **caractérisé en ce que** le palier (19) est porté par un support de palier (44) fixé à une partie stator de l'assemblage, et de préférence la structure annulaire interne (52) du carter intermédiaire (25).

9. Assemblage selon l'une quelconque des revendications précédentes, **caractérisé en ce que** le carter intermédiaire (25) comporte également une structure annulaire externe (56) reliée à la structure annulaire interne (52) par des bras radiaux (58), l'espace annulaire entre les deux structures annulaires interne et externe formant partie d'une veine primaire (16) de la turbomachine.

10. Turbomachine d'aéronef (1) comprenant un assemblage (50) selon l'une quelconque des revendications précédentes, la turbomachine étant préférentiellement un turboréacteur à double flux, et à double corps.

## Patentansprüche

1. Baugruppe (50) für eine Flugzeugturbomaschine, wobei die Baugruppe ein Gebläse (15), ein Geschwindigkeitsreduzierer (20) umfasst, der das Gebläse antreibt und sich hinter diesem befindet, ein Zwischengehäuse (25) mit einer inneren Ringstruktur (52), die innen einen Hohlraum (54) begrenzt, der mindestens teilweise das Getriebe aufnimmt, wobei letzteres ein Planetengetriebe umfasst, das mit einem Planetenträger (42) ausgestattet ist, dessen Hohlrad (60) an der inneren Ringstruktur (52) des Zwischengehäuses befestigt ist, über eine Hauptrückhaltevorrichtung (62),
**dadurch gekennzeichnet, dass** die Baugruppe eine Sekundärhaltevorrichtung (70) des Hohlrads (60) des Planetenradträgers in Bezug auf die innere Ringstruktur (52) des Zwischengehäuses umfasst, wobei die Sekundärhaltevorrichtung Folgendes umfasst:
- erste Vorsprünge (72a), die radial nach innen aus der inneren Ringstruktur (52) des Zwischengehäuses herausragen, wobei die ersten Vorsprünge um eine Längsachse (3) der Turbomaschine in Umfangsabständen zueinander angeordnet sind, wobei jeder erste Vorsprung (72a) eine radial nach innen geöffnete, axial nach unten geöffnete und in einer ersten Umfangsrichtung umlaufend geöffnete Aussparung (74) aufweist, die von drei Seiten begrenzt ist, jeweils eine axiale Haltefläche (76), eine radiale Haltefläche (78) sowie eine umlaufende Haltefläche (80);
- zweite Vorsprünge (72b), die radial nach außen aus dem Hohlrad (52) des Planetenradträgers herausragen, wobei die zweiten Vorsprünge um die Längsachse (3) der Turbomaschine herum voneinander abgesetzt sind und zwei zu zwei mit den ersten Vorsprüngen (72a) zusammenarbeiten, so dass jeder zweite Vorsprünge (72b) teilweise in der Aussparung (74) seines ersten zugehörigen Vorsprungs, stromabwärts davon, untergebracht ist.

2. Baugruppe nach Anspruch 1, **dadurch gekennzeichnet, dass** sie so eingerichtet ist, dass in einer normalen Betriebseinrichtung der Turbomaschine ein Radialspiel (R1) zwischen jedem zweiten Vorsprung (72b) und der radialen Haltefläche (78), die die Aussparung (74) des ersten Vorsprungs, mit dem sie zusammenarbeitet, begrenzt, und/oder ein Axialspiel (R2) zwischen jedem zweiten Vorsprung (72b) und der axialen Haltefläche (76), die diese Aussparung (74) begrenzt, definiert ist, und/oder ein Umfangsspiel zwischen jedem zweiten Vorsprung (72b) und der Umfangsaufnahmefläche (80), die diese Aussparung begrenzt, definiert ist.

3. Baugruppe nach Anspruch 1 oder Anspruch 2, **dadurch gekennzeichnet, dass** die innere Ringstruktur (52) des Zwischengehäuses (25) einteilig mit den ersten Vorsprüngen (72a) ausgeführt ist.

4. Baugruppe nach einem der vorhergehenden Ansprüche, **dadurch gekennzeichnet, dass** die Hauptrückhaltevorrichtung (70) ein weiches Ringstück mit einem allgemeinen U-förmigen Halbabschnitt aufweist, der radial nach außen offen ist, wobei der vorgelagerte Zweig (64) des U am Hohlrad (60) des Planetenträgers befestigt ist, und der nachgelagerte Zweig (66) des U an einem Flansch (68) der inneren Ringstruktur (52) des Zwischengehäuses befestigt ist, der radial nach innen vorsteht.

5. Verbindung nach einem der vorhergehenden Ansprüche, **dadurch gekennzeichnet, dass** die Anzahl der ersten Vorsprünge (72a) zwischen drei und fünfzehn, vorzugsweise zwischen sechs und zehn liegt.

6. Baugruppe nach einem der vorhergehenden Ansprüche, **dadurch gekennzeichnet, dass** der Planetenradsatz einen Außenring (38) aufweist, der in Planetenräder (34) des Planetenradträgers eingreift, wobei der Außenring (38) mit einer Gebläsewelle (17) verbunden ist.

7. Baugruppe nach Anspruch 6, **dadurch gekennzeichnet, dass** die Gebläsewelle (17) von einem Lager (19) getragen wird, das ihre axiale Sicherung in der Richtung von stromabwärts nach stromaufwärts sicherstellt.

8. Baugruppe nach Anspruch 7, **dadurch gekennzeichnet, dass** das Lager (19) von einem Lagerbock (44) getragen wird, der an einem Statorteil der Baugruppe und vorzugsweise an der inneren Ringstruktur (52) des Zwischengehäuses (25) befestigt ist.

9. Baugruppe nach einem der vorhergehenden Ansprüche, **dadurch gekennzeichnet, dass** das Zwischengehäuse (25) auch eine äußere Ringstruktur (56) aufweist, die mit der inneren Ringstruktur (52) durch Radialarme (58) verbunden ist, wobei der Ringraum zwischen den beiden inneren und äußeren Ringstrukturen Teil einer Primärvene (16) der Turbomaschine ist.

10. Flugzeugturbomaschine (1), die eine Baugruppe (50) nach einem der vorhergehenden Ansprüche umfasst, wobei die Turbomaschine vorzugsweise ein zweiflutiger Turboreaktor mit zwei Körpern ist.

## Claims

1. Assembly (50) for an aircraft turbine engine, the assembly comprising a fan (15), a speed reducer (20) driving the fan and located downstream thereof, an intermediate casing (25) including an inner annular structure (52) internally delimiting a cavity (54) at least partially housing the reducer, the latter comprising an epicyclic gear train equipped with a planetary carrier (42), one ring (60) of which is fixed to the inner annular structure (52) of the intermediate casing, by means of a main retaining device (62),
**characterised in that** the assembly includes a secondary retaining device (70) of the ring (60) of the planetary carrier relative to the inner annular structure (52) of the intermediate casing, the secondary retaining device comprising:
- first projections (72a) projecting radially inwardly from the inner annular structure (52) of the intermediate casing, the first projections being spaced apart circumferentially from one another about a longitudinal axis (3) of the turbine engine, each first projection (72a) having a recess (74) open radially inwardly, open axially downstream, and open circumferentially in a first circumferential direction, and delimited by three faces, respectively an axial retaining face (76), a radial retaining face (78), as well as a circumferential retaining face (80);
- second projections (72b) projecting radially outwardly from the ring (52) of the planetary carrier, the second projections being spaced apart circumferentially from one another about the longitudinal axis (3) of the turbine engine, and cooperating in pairs with the first projections (72a) in such a way that each second projection (72b) is partly housed in the recess (74) of its associated first projection, downstream thereof.

2. Assembly according to claim 1, **characterised in that** it is configured such that in a normal operating configuration of the turbine engine, a radial clearance (R1) is defined between each second projection (72b) and the radial retaining face (78) delimiting the recess (74) of the first projection with which it cooperates, and/or an axial clearance (R2) is defined between each second projection (72b) and the axial retaining face (76) delimiting this recess (74), and/or a circumferential clearance is defined between each second projection (72b) and the circumferential retaining face (80) delimiting this recess.

3. Assembly according to claim 1 or claim 2, **characterised in that** the inner annular structure (52) of the intermediate casing (25) is made in one piece, with first projections (72a).

4. Assembly according to any of the preceding claims, **characterised in that** main retaining device (70) includes a generally radially outwardly open U-shaped flexible half-section annular part, the upstream leg (64) of the U being secured to the ring (60) of the planetary carrier, and the downstream leg (66) of the U being secured to a radially inwardly projecting flange (68) of the inner annular structure (52) of the intermediate casing.

5. Assembly according to any of the preceding claims, **characterised in that** the number of first projections (72a) is between three and fifteen, and preferably between six and ten.

6. Assembly according to any of the preceding claims, **characterised in that** the epicyclic gear train includes an outer ring gear (38) meshing with planetary gears (34) of the planetary carrier, the outer ring gear (38) being connected to a fan shaft (17).

7. Assembly according to claim 6, **characterised in that** the fan shaft (17) is supported by a bearing (19) ensuring its axial retention in the direction from downstream to upstream.

8. Assembly according to claim 7, **characterised in that** the bearing (19) is supported by a bearing support (44) attached to a stator part of the assembly, and preferably the inner annular structure (52) of the intermediate casing (25).

9. Assembly according to any of the preceding claims, **characterised in that** the intermediate casing (25) also includes an outer annular structure (56) connected to the inner annular structure (52) by radial arms (58), the annular space between the two inner and outer annular structures forming part of a primary flow path (16) of the turbine engine.

10. Aircraft turbine engine (1) comprising an assembly (50) according to any of the preceding claims, the turbine engine preferably being a dual flow and dual body turbojet engine.
